# EUROPÄISCHE PATENTANMELDUNG

(11) **EP 4 317 323 A1**
(43) Veröffentlichungstag der Anmeldung: **07.02.2024**
(21) Anmeldenummer: 22188418.2
(22) Anmeldetag: 03.08.2022
(51) Int. Cl.: C08L 99/00, C08L 5/00, C08J 5/18, B29C 48/00

(54) **VERFAHREN ZUM VERNETZEN VON POLYSACCHARIDEN AUS MAKROALGEN ZU EINEM POLYMERWERKSTOFF**

(71) Anmelder: Brabender GmbH & Co. KG, 47055 Duisburg (DE)
(72) Erfinder: SCHMIDTCHEN, Ludwig, 01259 Dresden (DE)
(74) Vertreter: Michalski Hüttermann & Partner Patentanwälte mbB

(57) **Zusammenfassung**

Die vorliegende Erfindung betrifft ein Verfahren (1) zum Vernetzen von Polysacchariden aus Makroalgen zu einem Polymerwerkstoff, aufweisend die Schritte (11, 12, 13): Bereitstellen eines die Polysaccharide aus Makroalgen enthaltenden ersten Ausgangsstoffs (7), Zuführen des ersten Ausgangsstoffs (7) in einen Prozessraum (4) und Vernetzten der Polysaccharide zu einem Polymerwerkstoff in dem Prozessraum (4), wobei der erste Ausgangsstoff (7) zum Bereitstellen auf ein definiertes Molekulargewicht der Polysaccharide eingestellt wird. Die vorliegende Erfindung betrifft weiterhin ein Verfahren (2) zum Herstellen eines Biokunststoffprodukts in einer Vorrichtung (3) aufweisend einen Prozessraum (4) und eine Formgebungsvorrichtung (10), aufweisend die Schritte (11, 12, 13, 14, 15, 16): Vernetzen von Polysacchariden aus Makroalgen zu einem Polymerwerkstoff in dem Prozessraum (4) gemäß dem vorgenannten Verfahren (1) und Formgeben des Polymerwerkstoffs in der Formgebungsvorrichtung (10) zu einem Biokunststoffprodukt. Zudem betrifft die vorliegende Erfindung ein mit dem Verfahren (2) erhaltenes Biokunststoffprodukt sowie einen Ausgangsstoff (7) für eines der Verfahren (1, 2).

## Beschreibung

### Technisches Gebiet

Die vorliegende Erfindung betrifft ein Verfahren zum Vernetzen von Polysacchariden aus Makroalgen zu einem Polymerwerkstoff. Weiterhin betrifft die Erfindung ein Verfahren zum Herstellen eines Biokunststoffprodukts aus einem solchen Polymerwerkstoff in einer Vorrichtung aufweisend einen Prozessraum und zumindest eine Formgebungsvorrichtung. Die Erfindung betrifft zudem ein entsprechendes Biokunststoffprodukt sowie einen Ausgangsstoff für eines der vorgenannten Verfahren.

### Hintergrund der Erfindung

Verfahren zum Vernetzen von Polysacchariden aus Makroalgen zu einem Polymerwerkstoff und zum Herstellen von Biokunststoffprodukten daraus sind aus dem Stand der Technik bereits bekannt, insbesondere als Gießverfahren oder Extrusionsverfahren. Ein Extrusionsverfahren zum Umhüllen einer Flüssigkeit ist beispielsweise aus WO 2018/172781 A1 und WO 2020/065270 A1 bekannt, ein Pressformverfahren ist ferner aus US 2017/0266847 A1 bekannt.

Biokunststoffprodukte weisen gegenüber Kunststoffprodukten aus fossilen Ausgangstoffen große Vorteile auf, insbesondere wird mit Biokunststoffprodukten kein fossiles Kohlendioxid freigesetzt und sie sind biologisch abbaubar. Bei den bisher bekannten Herstellungsverfahren für makroalgenbasierte Biokunststoffprodukte besteht jedoch das Problem, dass die Makroalgen, aus denen die Polysaccharide gewonnen werden, natürlichen Schwankungen ihrer Eigenschaften unterliegen. Eine kontinuierliche Produktion solcher Biokunststoffprodukte mit gleichbleibenden Verfahrensparametern und gleichbleibender Produktqualität ist daher nicht in befriedigender Weise zu erreichen, sodass eine industrielle Produktion von makroalgenbasierten Biokunststoffprodukten bisher nicht gelingt.

### Beschreibung der Erfindung

Ausgehend von dieser Situation ist es eine Aufgabe der vorliegenden Erfindung, ein Verfahren vorzuschlagen, mit dem eine kontinuierliche Produktion von makroalgenbasierte Biokunststoffprodukte ermöglicht wird.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nachfolgend werden Vorteile der beanspruchten Erfindungsaspekte erläutert und weiter nachfolgend bevorzugte modifizierte Ausführungsformen der Erfindungsaspekte beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Nach einem ersten Aspekt der Erfindung wird die Aufgabe gelöst durch ein Verfahren zum Vernetzen von Polysacchariden aus Makroalgen zu einem Polymerwerkstoff in einem Prozessraum, aufweisend die Schritte: Bereitstellen eines die Polysaccharide aus Makroalgen enthaltenden ersten Ausgangsstoffs, Zuführen des ersten Ausgangsstoffs in den Prozessraum und Vernetzten der Polysaccharide zu einem Polymerwerkstoff in dem Prozessraum, wobei der erste Ausgangsstoff zum Bereitstellen auf ein definiertes Molekulargewicht der Polysaccharide eingestellt wird.

Soweit Elemente mit Hilfe einer Nummerierung bezeichnet sind, also beispielsweise "erstes Bauteil", "zweites Bauteil" und "drittes Bauteil", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass beispielsweise ein eine Vorrichtung oder ein Verfahren nicht ein "erstes Element" aufweisen muss, um ein "zweites Element" aufweisen zu können. Auch kann die Vorrichtung ein "erstes Element", sowie ein "drittes Element" umfassen, ohne aber zwangsläufig ein "zweites Element" aufzuweisen. Es können auch mehrere Einheiten eines Elements einer einzelnen Nummerierung vorgesehen sein, also beispielsweise mehrere "erste Elemente".

Als ein Polymerwerkstoff wird ein Material verstand, dass aus vernetzten Makromolekülen, insbesondere aus vernetzten Polysacchariden gebildet ist. Unter einem Kunststoffprodukt wird ein in eine bestimmte Produktform gebrachter Polymerwerkstoff verstanden. Insbesondere werden bei einem Kunststoffprodukt anschließend an die Formgebung noch gewünschte Materialeigenschaften eingestellt, beispielsweise durch Trocknen und Abkühlen des Kunststoffprodukts. Insofern das Kunststoffprodukt mit dem Präfix "Bio-" versehen sind, handelt es sich um ein rein aus biologisch abbaubaren Stoffen hergestelltes Kunststoffprodukt. Insbesondere ist ein Biokunststoffprodukt rein aus einem auf Polysacchariden aus Makroalgen basierenden Polymerwerkstoff hergestellt und in seiner Gesamtheit vollständig biologisch abbaubar.

Ein Prozessraum ist durch eine Kavität gebildet, die beispielsweise über Eingänge befüllt und beispielsweise über Ausgänge entleert werden kann, wobei Eingänge und Ausgänge auch zusammenfallen können. Insbesondere ist ein Prozessraum beispielsweise eine geschlossene Kavität, in der der erste Ausgangsstoff und ggf. weitere Ausgangsstoffe zunächst eingefüllt werden und die Kavität daraufhin geschlossen wird. Bevorzugt ist der Prozessraum jedoch ein Prozessraum mit einem Eingang oder mehreren Eingängen und einem Ausgang oder mehreren Ausgängen, in dem das Verfahren kontinuierlich durchgeführt werden kann. Der Eingang / die Eingänge und der Ausgang / die Ausgänge sind dann beispielsweise durch einströmende Ausgangsstoffe bzw. den ausströmenden Polymerwerkstoff gedichtet, sodass innerhalb des Prozessraumes ein gegenüber der Umgebung erhöhter Druck vorherrschen kann. In oder an einem Prozessraum sind insbesondere Mittel zum Temperieren und Einstellen des in dem Prozessraum herrschenden Drucks vorgesehen.

Ein Polysaccharid aus Makroalgen enthaltender erster Ausgangsstoff ist insbesondere durch die Makroalge selbst gebildet, die besonders bevorzugt für das Verfahren getrocknet und zerkleinert wird. Die Makroalge weist dabei einen bestimmten Anteil an Polysacchariden auf. Der erste Ausgangsstoff ist alternativ durch reine Polysaccharide gebildet, wobei die Polysaccharide zu diesem Zweck aus der Makroalge extrahiert werden, beispielsweise als Hydrokolloid. Auch die Verwendung eines Zwischenprodukts zwischen Makroalge und reinen Polysacchariden als erster Ausgangsstoff ist möglich. Bevorzugt weist der erste Ausgangsstoff genau eine Art von Polysacchariden oder mehrere Arten von Polysacchariden aus Alginat, Agar oder Carrageenan auf oder es wird als erster Ausgangsstoff genau eine Art von Polysacchariden oder mehrere Arten von Polysacchariden aus Alginat, Agar oder Carrageenan in Reinform verwendet. Als Makroalgen können beispielsweise Rotalgen wie Kappaphycus Alvarezii oder Euchema Denticulatum oder Braunalgen wie Saccharina Latissima oder Laminaria Digitata verwendet werden.

Das Molekulargewicht eines Makromoleküls, das auch Molekülmasse genannt wird, ist die Summe der Molmassen der sich wiederholenden Struktureinheiten. Die Molmasse der Struktureinheiten setzt sich aus der Summe der Atommassen zusammen, aus denen die Struktureinheit besteht. Das Molekulargewicht wird hier insbesondere als absolutes Molekulargewicht mit der Einheit Gramm pro Mol (g/mol) verstanden. Gemessene Molmassen eines Makromoleküls stellen immer einen Mittelwert dar Insofern der erste Ausgangsstoff auf ein definiertes Molekulargewicht der Polysaccharide eingestellt wird, weist der Ausgangsstoff dieses definierte Molekulargewicht im Mittelwert auf. Bevorzugt, jedoch nicht zwingend, weist der erste Ausgangsstoff das definierte Molekulargewicht im Mittelwert auf, wobei die Streuung des Molekulargewichts um diesen Mittelwert in bestimmten Grenzen, beispielsweise 2%, 5%, 10%, 15%, 20%, 25%, 30%, 35%, 40%, 45%, 50%, 55%, 60%, 65% oder 70% ober- und/oder unterhalb des definierten Molekulargewichts liegt.

Der erste Erfindungsaspekt umfasst nun die Lehre, dass das Molekulargewicht als Faktor herangezogen wird, anhand dessen das erste Ausgangsprodukt für die Herstellung des Polymerwerkstoffs qualifiziert wird. Dem liegt die überraschende Erkenntnis zugrunde, dass sich durch Einhalten des definierten Molekulargewichts für die Polysaccharide in dem ersten Ausgangsstoff bei gleichbleibenden Verfahrensparametern gleichbleibende Eigenschaften des Polymerwerkstoffs ergeben, die das Herstellen von Biokunststoffprodukten in kontinuierlicher Verfahrensweise und mit gleichbleibenden Eigenschaften bzw. gleichbleibender Produktqualität ermöglichen. Der erste Ausgangsstoff wird also bei dem kontinuierlich ausgeführten Verfahren dauerhaft und gleichbleibend mit dem eingestellten definierten Molekulargewicht der Polysaccharide zugeführt. Das Verfahren nach dem ersten Erfindungsaspekt ermöglicht dann besonders vorteilhaft die kontinuierliche industrielle Produktion von makroalgenbasierten Polymerwerkstoffen bzw. Biokunststoffprodukten. Insbesondere ist der mittels des Verfahrens nach dem ersten Erfindungsaspekt hergestellte Polymerwerkstoff mittels verschiedener Urformverfahren beliebig formbar, sodass eine Vielzahl von Anwendungsgebieten erschlossen ist.

Ein übliches Molekulargewicht für natürlich in Makroalgen vorkommenden Polysaccharide variiert stark für verschiedene Makroalgen und liegt beispielsweise zwischen 200.000 g/mol und 1.300.000 g/mol. Es sind aus der Literatur auch Werte bis zu 2.000.000 g/mol für bestimmte Polysaccharide bzw. bestimmte Makroalgen bekannt. Insbesondere kann auch das Molekulargewicht eines in einer bestimmten Makroalge vorkommenden Polysaccharids deutlich variieren. Das Verfahren nach dem ersten Erfindungsaspekt umfasst diesbezüglich die Lehre, das mittlere Molekulargewicht bei dem ersten Ausgangsstoff einzustellen.

Je nach Molekulargewicht lassen sich Polysaccharide bei bestimmten Verfahrensparametern und in bestimmten Vorrichtungen zum Ausführen eines unterschiedlich gut vernetzen, wobei insbesondere der resultierende Polymerwerkstoff je nach Molekulargewicht des ersten Ausgangsstoffs unterschiedliche Eigenschaften aufweist. Die Eigenschaften des Polymerwerkstoffs sollten sich dabei so ergeben, dass der Polymerwerkstoff in der gegebenen Vorrichtung mit gegebenen Verfahrensparametern gut zu verarbeiten ist und sich zu einem Biokunststoffprodukt mit vorteilhaften Eigenschaften für eine bestimmte Anwendung verarbeiten lässt. Das definierte Molekulargewicht des ersten Ausgangsstoffs wird daher bevorzugt je nach Verfahrensparametern, Vorrichtung und gewünschten Eigenschaften eines resultierenden Biokunststoffprodukts bestimmt und entsprechend eingestellt. Relevante Eigenschaften des Polymerwerkstoffs sind beispielsweise dessen rheologische und chemischen Eigenschaften. Relevante Eigenschaften eines Biokunststoffprodukts sind insbesondere mechanische Eigenschaften wie Zähigkeit und Festigkeit sowie beispielsweise dessen chemische Beständigkeit. Beispielsweise wird der erste Ausgangsstoff zum Bereitstellen auf ein definiertes Molekulargewicht von weniger als 900.000 g/mol, weniger als 890.000 g/mol, weniger als 880.000 g/mol, weniger als 870.000 g/mol, weniger als 860.000 g/mol, weniger als 850.000 g/mol, weniger als 840.000 g/mol, weniger als 830.000 g/mol, weniger als 820.000 g/mol, weniger als 810.000 g/mol, weniger als 800.000 g/mol, weniger als 790.000 g/mol, weniger als 780.000 g/mol, weniger als 770.000 g/mol, weniger als 760.000 g/mol, weniger als 750.000 g/mol, weniger als 740.000 g/mol, weniger als 730.000 g/mol, weniger als 720.000 g/mol, weniger als 710.000 g/mol, weniger als 700.000 g/mol, weniger als 690.000 g/mol, weniger als 680.000 g/mol, weniger als 670.000 g/mol, weniger als 660.000 g/mol, weniger als 650.000 g/mol, weniger als 640.000 g/mol, weniger als 630.000 g/mol, weniger als 620.000 g/mol, weniger als 610.000 g/mol, weniger als 600.000 g/mol, weniger als 590.000 g/mol, weniger als 580.000 g/mol, weniger als 570.000 g/mol, weniger als 560.000 g/mol, weniger als 550.000 g/mol, weniger als 540.000 g/mol, weniger als 530.000 g/mol, weniger als 520.000 g/mol, weniger als 510.000 g/mol, weniger als 500.000 g/mol, weniger als 490.000 g/mol, weniger als 480.000 g/mol, weniger als 470.000 g/mol, weniger als 460.000 g/mol, weniger als 450.000 g/mol, weniger als 440.000 g/mol, weniger als 430.000 g/mol, weniger als 420.000 g/mol, weniger als 410.000 g/mol, weniger als 400.000 g/mol, weniger als 390.000 g/mol, weniger als 380.000 g/mol, weniger als 370.000 g/mol, weniger als 360.000 g/mol, weniger als 350.000 g/mol, weniger als 340.000 g/mol, weniger als 330.000 g/mol, weniger als 320.000 g/mol, weniger als 310.000 g/mol, weniger als 300.000 g/mol, weniger als 290.000 g/mol, weniger als 280.000 g/mol, weniger als 270.000 g/mol, weniger als 260.000 g/mol, weniger als 250.000 g/mol, weniger als 240.000 g/mol, weniger als 230.000 g/mol, weniger als 220.000 g/mol, weniger als 210.000 g/mol, weniger als 200.000 g/mol, weniger als 190.000 g/mol, weniger als 180.000 g/mol, weniger als 170.000 g/mol, weniger als 160.000 g/mol, weniger als 150.000 g/mol, weniger als 140.000 g/mol, weniger als 130.000 g/mol, weniger als 120.000 g/mol, weniger als 110.000 g/mol, weniger als 100.000 g/mol, weniger als 90.000 g/mol, weniger als 80.000 g/mol, weniger als 70.000 g/mol, weniger als 60.000 g/mol oder weniger als 50.000 g/mol eingestellt.

Das definierte Molekulargewicht wird bei dem ersten Ausgangsstoff beispielsweise durch ein mechanisches Verfahren, ein thermisches Verfahren, ein chemisches Verfahren, ein enzymatisches Verfahren, ein aerobes und/oder anaerobes biologisches Verfahren, durch Strahlung und/oder durch Ultraschall eingestellt. Besonders bevorzugt wird der erste Ausgangsstoff zum Einstellen des definierten Molekulargewichts enzymatisch behandelt, temperiert und/oder gelagert.

In besonderer Weise eignet sich Carrageenan als Polysaccharid für den ersten Ausgangsstoff, wobei der erste Ausgangsstoff beispielsweise carrageenanhaltige Makroalgen und/oder das Carrageenan in Reinform enthält. Carrageen weist günstige Eigenschaften auf, um in dem Prozessraum neben der Vernetzung auch gefördert zu werden, beispielsweise hin zu einer Formgebungsvorrichtung, und ergibt zudem günstige Materialeigenschaften für ein Biokunststoffprodukt. Der erste Ausgangsstoff kann neben den carrageenanhaltige Makroalgen und/oder dem Carrageenan in Reinform auch weitere Stoffe enthalten, insbesondere solche, die die Makroalgen neben dem Carrageenan aufweisen.

In einer bevorzugten Ausführungsform wird in den Prozessraum neben dem ersten Ausgangsstoff zumindest ein zweiter Ausgangsstoff, insbesondere eine Wasser enthaltende Flüssigkeit, zugeführt. Die Flüssigkeit ist beispielsweise im Wesentlichen aus Wasser gebildet und kann zudem auch weitere Stoffe enthalten. Insbesondere kann die Flüssigkeit auch Feststoffe enthalten, die beispielsweise bei der im Prozessraum herrschenden Temperatur und dem im Prozessraum herrschenden Druck flüssig sind bzw. werden. Es liegt zudem auch im Sinne der Erfindung, wenn der erste Ausgangsstoff und weitere Ausgangsstoffe wie etwa der zweite Ausgangsstoff zu unterschiedlichen Zeitpunkten während dem Ablauf des Verfahrens hinzugefügt werden. Der zweite Ausgangsstoff kann für verschiedene verfahrenstechnische Funktionen, etwa verbesserte rheologische Eigenschaften oder verbesserte Lösbarkeit der Polysaccharide, oder zum Erzielen einer bestimmten Eigenschaft des Polymerwerkstoffs oder eines daraus hergestellten Biokunststoffprodukts, beispielsweise einer bestimmten mechanischen Eigenschaft, ausgebildet sein. Besonders bevorzugt enthält der zweite Ausgangsstoff Wasser und zumindest einen Zusatzstoff, wie beispielsweise ein Lösungsmittel und/oder einen Weichmacher, um eine gute Lösung der Polysaccharide und gute mechanische Eigenschaften eines aus dem Polymerwerkstoff hergestellten Biokunststoffprodukts zu erreichen.

Bevorzugt weist ein als Lösungsmittel ausgebildeter Zusatzstoff eine hohe Polarität auf. Auf diese Weise kann eine insgesamt gute Lösbarkeit der polaren Polysaccharide erreicht werden.

Weiterhin bevorzugt ist der Zusatzstoff nicht-flüchtig. Insbesondere ein als Weichmacher ausgebildeter Zusatzstoff ist nicht-flüchtig ausgebildet. Der Zusatzstoff verbleibt dann bei und nach dem Trocknen und Abkühlen eines Biokunststoffprodukts in dem Biokunststoffprodukt und verdunstet nicht. Dies gilt insbesondere bei erwarteten Einsatz- oder Transportbedingungen, insbesondere einer erwarteten Einsatz- oder Transporttemperatur des Biokunststoffprodukts, beispielsweise bei einer Umgebungstemperatur von bis zu 80° Celsius. Eine solche Temperatur kann etwa in einem Transportcontainer bei Sonneneinstrahlung vorherrschen.

In einer bevorzugten Ausführungsform enthält der zumindest eine Zusatzstoff Glycerin und/oder Sorbitol. In weiteren Ausführungsformen ist zumindest ein Zusatzstoff durch Pentaerythrit, Polyol, Zuckeralkohol, Poly(oxyethylen), Poly(oxypropylen), nichtionische Tenside und/oder anionische Tenside gebildet, die jeweils insbesondere als Weichmacher in einem Biokunststoffprodukt wirken. Weitere bevorzugte Zusatzstoffe, die insbesondere als Lösemittel wirken, sind Glykole, beispielsweise Ethylenglykol oder Diethylenglykol, Methanol, Ethanol, Maltodextrin und/oder Harnstoff. Als Zusatzstoffe können weiterhin vorgesehen sein: 1,3-Butylenglykol, Essig- und Fettsäureester von Glycerin, Aceton, acetyliertes Distärkeadipat, acetylierte Monoglyceride, säurebehandelte Stärke, alkalisch behandelte Stärke, Ascorbinsäure, Palmitinsäureascorbylester, Ascorbylstearat, Azodicarboxamid, Bienenwachs, gebleichte Stärke, Knochenphosphat, bromiertes Pflanzenöl, Kalziumacetat, Kalziumaluminiumsilikat, Pflanzenöle Kalziumascorbat, Kalziumbenzoat, Kalziumbromat, Kalziumkarbonate, Kalziumchlorid, Kalziumcitrat, Kalziumdihydrogenphosphat, Kalziumferrocyanid, Kalziumglukonat, Kalziumhydrogensulfit, Kalziumhydroxid, Kalziumjodat, Kalziumlactat, Kalziumlactatgluconat, Kalziumlactobionat, Saccharose Kalziumperoxid, Kalziumphosphat, Kalziumpolyphosphate, Kalziumsalze von Fettsäuren, Kalziumsilicat, Kalziumsorbat, Kalziumstearat, Kalziumstearoyllactylat, Kalziumsulfat, Kalziumtartrat, Sojaprotein, Kalziumiodiat, Candelillawachs, Carnaubawachs, Johannisbrotkernmehl, Rizinusöl, , Zitronensäure, Erbsenprotein, Zitronensäure- und Fettsäureester des Glycerins, vernetzte Natriumcarboxymethylcellulose Carboxymethylcellulose, Kupfersulfat von Mono- und Diglyceriden von Fettsäuren, Diammoniumhydrogenphosphat, Dikalziumpyrophosphat, Diethylpyrocarbonat, Ethylalkohol, Ethylcellulose, Ethylhydroxyethylzellulose, , Ester von Glycerin und thermisch oxidierte Sojafettsäuren, Zein ethoxylierte Mono- und Diglyceride, Ethylhydroxyethylcellulose, Ameisensäure, Gelatine, Glycerin, Guarkernmehl, , Gummiarabikum, , Peroxidderivate, Wasserstoffperoxid, hydroxyliertes Lecithin, Hydroxypropylzellulose, Hydroxypropyldistärke, Zellulosederivate.

Nach einem zweiten Aspekt der Erfindung wird die Aufgabe gelöst durch ein Verfahren zum Herstellen eines Biokunststoffprodukts in einer Vorrichtung aufweisend einen Prozessraum und zumindest eine Formgebungsvorrichtung, aufweisend die Schritte: Vernetzen von Polysacchariden aus Makroalgen zu einem Polymerwerkstoff in dem Prozessraum gemäß dem Verfahren nach einem der vorhergehenden Ansprüche und Formgeben des Polymerwerkstoffs in der zumindest einen Formgebungsvorrichtung zu einem Biokunststoffprodukt. Dabei kann die Formgebung beispielsweise bei einem als Gießverfahren ausgebildeten Verfahren gleichzeitig mit bzw. vor dem Vernetzten in einem als Gussform ausgebildeten Prozessraum erfolgen oder beispielsweise in einem Extrusionsverfahren nach dem Vernetzen erfolgen. Mit dem Verfahren nach dem zweiten Erfindungsaspekt werden die bereits bezüglich des ersten Erfindungsaspekts vorbeschriebenen Vorteile entsprechend erreicht. Insbesondere ist das Verfahren geeignet, ein Biokunststoffprodukt mit gleichbleibenden Eigenschaften bzw. gleichbleibender Produktqualität in kontinuierlicher Verfahrensweise herzustellen.

Das Verfahren nach dem zweiten Erfindungsaspekt umfasst weiterhin optional die Schritte Trocknen des Biokunststoffprodukts und/oder Abkühlen des Biokunststoffprodukts. Dabei ist das Trocknen und/oder das Abkühlen des Biokunststoffprodukts insofern optional, als dass es jeweils nur dann durchgeführt wird bzw. werden muss, wenn nach dem Formgeben eine entsprechende Restfeuchte und/oder Temperatur in dem Biokunststoffprodukt vorliegt, wenn also die Restfeuchte und/oder Temperatur höher liegt als gewünscht.

Der Prozessraum beim Verfahren nach dem zweiten Erfindungsaspekt kann beispielsweise durch eine einfache Kavität gebildet sein, in der das Verfahren batchweise durchgeführt wird. In einer bevorzugten Ausführungsform ist der Prozessraum durch einen Schneckenextruder ausgebildet. Besonders bevorzugt ist der Schneckenextruder als Doppelschneckenextruder ausgebildet. Bei einem Schneckenextruder erstreckt sich eine oder erstrecken sich mehrere parallele Schnecken durch einen Kanal, die eingangsseitig den ersten Ausgangsstoff bzw. die Ausgangsstoffe einzieht bzw. einziehen und den Polymerwerkstoff ausgangsseitig in oder durch eine Formgebungsvorrichtung drückt bzw. drücken. Bevorzugt erfolgt eine Durchmischung mehrerer Ausgangsstoffe in dem Schneckenextruder. Dabei können durch die Geometrie der Schnecke/n und die Betriebsparameter des Schneckenextruders die Förderleistung des Schneckenextruders sowie der in dem Prozessraum herrschende Druck bestimmt werden. Der Druck kann dabei bevorzugt weder eingangsseitig noch ausgangsseitig aus dem Prozessraum entweichen, da Eingang und Ausgang durch den ersten Ausgangsstoff bzw. die Ausgangstoffe und den Polymerwerkstoff abgedichtet sind.

Besonders bevorzugt ist die zumindest eine Formgebungsvorrichtung durch eine Extrusionsdüse gebildet. Mit einer Extrusionsdüse kann ein aus einem Prozessraum heraustretenden Polymerwerkstoff kontinuierlich in eine Endlosform geformt werden, beispielsweise zu einer Folie, einem Halbzeug für eine Folie oder einem Profil. Eine optional auf die Formgebung folgende Trocknung und ein Auskühlen können dann beispielsweise unter Umgebungsbedingungen erfolgen, wobei die Restwärme des Biokunststoffprodukts zum Trocknen des Biokunststoffprodukts genutzt werden kann. In einer weiteren Ausführungsform ist die zumindest eine Formgebungsvorrichtung durch eine Spritzgussvorrichtung gebildet. Es können dann mit dem Polymerwerkstoff Biokunststoffprodukte mit vergleichsweise komplexen Geometrien mittels Spritzguss hergestellt werden.

Die Aufgabe wird nach einem dritten Aspekt der Erfindung gelöst mit einem Biokunststoffprodukt, erhalten durch ein Verfahren nach dem zweiten Aspekt der Erfindung. Das Biokunststoffprodukt weist die Vorteile des ersten und zweiten Erfindungsaspekts entsprechend auf. Insbesondere weist das Biokunststoffprodukt gleichbleibende Eigenschaften bzw. eine gleichbleibende Produktqualität auf, ist vollständig biologisch abbaubar und in vergleichsweise komplexen Geometrien herstellbar.

Insbesondere ist das Biokunststoffprodukt dadurch gekennzeichnet, dass es ebenso wie der erste Ausgangsstoff ein definiertes Molekulargewicht der Polymermoleküle aufweist. Besonders bevorzugt weist das Biokunststoffprodukt das definierte Molekulargewicht im Mittelwert auf. Bei einem idealen Verfahren würde sich das gleiche Molekulargewicht für das Biokunststoffprodukt wie für den ersten Ausgangsstoff ergeben. Bei realen Verfahren sinkt das Molekulargewicht des Biokunststoffs auf Grund der während der Vernetzung vorherrschenden Prozessbedingungen gegenüber dem Molekulargewicht des ersten Ausgangsstoffs jedoch ab, beispielsweise um etwa 10.000 bis 100.000 g/mol. In einer Ausführungsform weist das Biokunststoffprodukt ein Molekulargewicht von weniger als 900.000 g/mol auf. In weiteren Ausführungsformen weist das Biokunststoffprodukt ein Molekulargewicht von weniger als 890.000 g/mol, weniger als 880.000 g/mol, weniger als 870.000 g/mol, weniger als 860.000 g/mol, weniger als 850.000 g/mol, weniger als 840.000 g/mol, weniger als 830.000 g/mol, weniger als 820.000 g/mol, weniger als 810.000 g/mol, weniger als 800.000 g/mol, weniger als 790.000 g/mol, weniger als 780.000 g/mol, weniger als 770.000 g/mol, weniger als 760.000 g/mol, weniger als 750.000 g/mol, weniger als 740.000 g/mol, weniger als 730.000 g/mol, weniger als 720.000 g/mol, weniger als 710.000 g/mol, weniger als 700.000 g/mol, weniger als 690.000 g/mol, weniger als 680.000 g/mol, weniger als 670.000 g/mol, weniger als 660.000 g/mol, weniger als 650.000 g/mol, weniger als 640.000 g/mol, weniger als 630.000 g/mol, weniger als 620.000 g/mol, weniger als 610.000 g/mol, weniger als 600.000 g/mol, weniger als 590.000 g/mol, weniger als 580.000 g/mol, weniger als 570.000 g/mol, weniger als 560.000 g/mol, weniger als 550.000 g/mol, weniger als 540.000 g/mol, weniger als 530.000 g/mol, weniger als 520.000 g/mol, weniger als 510.000 g/mol, weniger als 500.000 g/mol, weniger als 490.000 g/mol, weniger als 480.000 g/mol, weniger als 470.000 g/mol, weniger als 460.000 g/mol, weniger als 450.000 g/mol, weniger als 440.000 g/mol, weniger als 430.000 g/mol, weniger als 420.000 g/mol, weniger als 410.000 g/mol, weniger als 400.000 g/mol, weniger als 390.000 g/mol, weniger als 380.000 g/mol, weniger als 370.000 g/mol, weniger als 360.000 g/mol, weniger als 350.000 g/mol, weniger als 340.000 g/mol, weniger als 330.000 g/mol, weniger als 320.000 g/mol, weniger als 310.000 g/mol, weniger als 300.000 g/mol, weniger als 290.000 g/mol, weniger als 280.000 g/mol, weniger als 270.000 g/mol, weniger als 260.000 g/mol, weniger als 250.000 g/mol, weniger als 240.000 g/mol, weniger als 230.000 g/mol, weniger als 220.000 g/mol, weniger als 210.000 g/mol, weniger als 200.000 g/mol, weniger als 190.000 g/mol, weniger als 180.000 g/mol, weniger als 170.000 g/mol, weniger als 160.000 g/mol, weniger als 150.000 g/mol, weniger als 140.000 g/mol, weniger als 130.000 g/mol, weniger als 120.000 g/mol, weniger als 110.000 g/mol, weniger als 100.000 g/mol, weniger als 90.000 g/mol, weniger als 80.000 g/mol, weniger als 70.000 g/mol, weniger als 60.000 g/mol, weniger als 50.000 g/mol, weniger als 40.000 g/mol, weniger als 30.000 g/mol, weniger als 20.000 g/mol oder weniger als 10.000 g/mol auf.

Weiterhin bevorzugt ist das Biokunststoffprodukt als Folie, als Halbzeug für eine Folie oder als Profil ausgebildet. Bei derartigen Biokunststoffprodukten werden die Vorteile des Verfahrens nach dem zweiten Erfindungsaspekt insbesondere erreicht. Insbesondere bedürfen solche Biokunststoffprodukte das Einstellen von Produkteigenschaften in engen Grenzen und bei gleichbleibender Qualität. Beispielsweise bei einer Folie würde eine lokale Abweichung der Produktqualität an einer Stelle der Folie dazu führen, dass an dieser Stelle eine erhöhte Rissgefahr vorliegt. Das Biokunststoffprodukt ist weiterhin besonders bevorzugt extrudiert.

Die Aufgabe wird letztlich nach einem vierten Aspekt der Erfindung gelöst durch einen Ausgangsstoff für ein Verfahren nach dem ersten oder zweiten Erfindungsaspekt, enthaltend zumindest ein Polysaccharid aus Makroalgen, wobei der Ausgangsstoff ein definiertes Molekulargewicht der Polysaccharide aufweist. Die Vorteile eines so ausgebildeten Ausgangsstoff sind bezüglich der ersten drei Erfindungsaspekte ausführlich vorbeschrieben und werden entsprechend erreicht. Insbesondere beträgt das definierte Molekulargewicht des Ausgangsstoffs nach dem vierten Erfindungsaspekt weniger als 900.000 g/mol, weniger als 890.000 g/mol, weniger als 880.000 g/mol, weniger als 870.000 g/mol, weniger als 860.000 g/mol, weniger als 850.000 g/mol, weniger als 840.000 g/mol, weniger als 830.000 g/mol, weniger als 820.000 g/mol, weniger als 810.000 g/mol, weniger als 800.000 g/mol, weniger als 790.000 g/mol, weniger als 780.000 g/mol, weniger als 770.000 g/mol, weniger als 760.000 g/mol, weniger als 750.000 g/mol, weniger als 740.000 g/mol, weniger als 730.000 g/mol, weniger als 720.000 g/mol, weniger als 710.000 g/mol, weniger als 700.000 g/mol, weniger als 690.000 g/mol, weniger als 680.000 g/mol, weniger als 670.000 g/mol, weniger als 660.000 g/mol, weniger als 650.000 g/mol, weniger als 640.000 g/mol, weniger als 630.000 g/mol, weniger als 620.000 g/mol, weniger als 610.000 g/mol, weniger als 600.000 g/mol, weniger als 590.000 g/mol, weniger als 580.000 g/mol, weniger als 570.000 g/mol, weniger als 560.000 g/mol, weniger als 550.000 g/mol, weniger als 540.000 g/mol, weniger als 530.000 g/mol, weniger als 520.000 g/mol, weniger als 510.000 g/mol, weniger als 500.000 g/mol, weniger als 490.000 g/mol, weniger als 480.000 g/mol, weniger als 470.000 g/mol, weniger als 460.000 g/mol, weniger als 450.000 g/mol, weniger als 440.000 g/mol, weniger als 430.000 g/mol, weniger als 420.000 g/mol, weniger als 410.000 g/mol, weniger als 400.000 g/mol, weniger als 390.000 g/mol, weniger als 380.000 g/mol, weniger als 370.000 g/mol, weniger als 360.000 g/mol, weniger als 350.000 g/mol, weniger als 340.000 g/mol, weniger als 330.000 g/mol, weniger als 320.000 g/mol, weniger als 310.000 g/mol, weniger als 300.000 g/mol, weniger als 290.000 g/mol, weniger als 280.000 g/mol, weniger als 270.000 g/mol, weniger als 260.000 g/mol, weniger als 250.000 g/mol, weniger als 240.000 g/mol, weniger als 230.000 g/mol, weniger als 220.000 g/mol, weniger als 210.000 g/mol, weniger als 200.000 g/mol, weniger als 190.000 g/mol, weniger als 180.000 g/mol, weniger als 170.000 g/mol, weniger als 160.000 g/mol, weniger als 150.000 g/mol, weniger als 140.000 g/mol, weniger als 130.000 g/mol, weniger als 120.000 g/mol, weniger als 110.000 g/mol, weniger als 100.000 g/mol, weniger als 90.000 g/mol, weniger als 80.000 g/mol, weniger als 70.000 g/mol, weniger als 60.000 g/mol oder weniger als 50.000 g/mol.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine schematisches Verfahrensschaubild eines Verfahrens nach dem ersten Aspekt der Erfindung;
- Fig. 2: eine schematisches Verfahrensschaubild eines Verfahrens nach dem zweiten Aspekt der Erfindung; und
- Fig. 3: eine schematische Schnittansicht einer Vorrichtung zum Ausführen eines Verfahrens nach dem ersten und/oder zweiten Aspekt der Erfindung.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

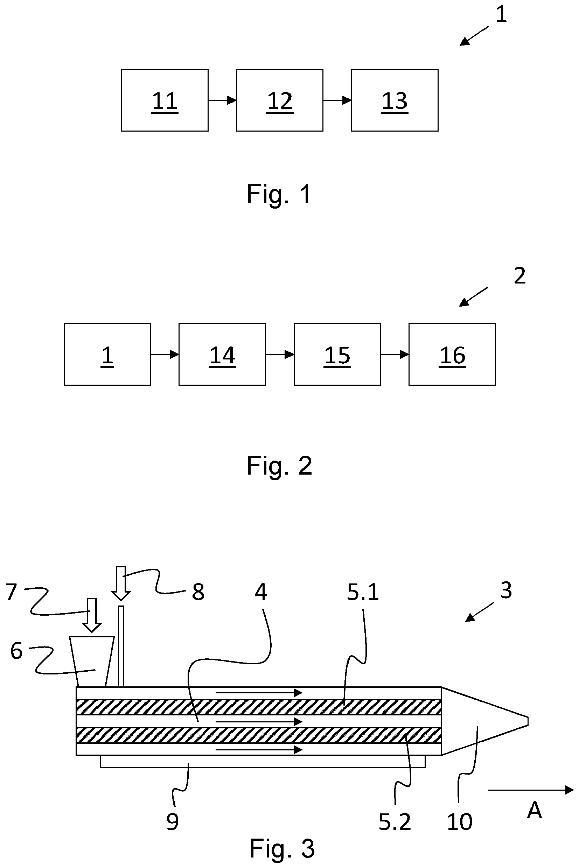

Figur 1 zeigt ein Verfahren 1 nach dem ersten Erfindungsaspekt zum Vernetzen von Polysacchariden aus Makroalgen zu einem Polymerwerkstoff in einem Prozessraum. In einem ersten Schritt 11 wird ein die Polysaccharide aus Makroalgen enthaltender erster Ausgangsstoff bereitgestellt. Bevorzugt wird der erste Ausgangsstoff dabei aus den Makroalgen selbst, aus reinen Polysacchariden, die aus Makroalgen gewonnen wurde oder aus einem Zwischenprodukt gebildet. Der erste Ausgangsstoff enthält als Polysaccharide beispielsweise Alginat, Alginsäure und oder Agar und/oder besonders bevorzugt Carrageenan. Der erste Ausgangsstoff weist zudem ein eingestelltes definiertes Molekulargewicht auf, beispielsweise weniger als 900.000 g/mol, um zu erreichen, dass der erste Ausgangsstoff in den folgenden Schritten mit gleichbleibenden Eigenschaften bzw. gleichbleibender Produktqualität verarbeitet wird. In einem zweiten Schritt 12 wird der erste Ausgangsstoff in den Prozessraum zugeführt. Insbesondere werden zudem weitere Ausgangsstoffe, beispielsweise Flüssigkeiten mit Wasser und Zusatzstoffen zum Verbessern der Prozessbedingungen in dem Prozessraum und oder der Eigenschaften des ersten Ausgangsstoffs und/oder einem (Zwischen-)Produkt daraus, in den Prozessraum zugeführt. In einem dritten Schritt 13 werden in dem Prozessraum die Polysaccharide zu einem Polymerwerkstoff vernetzt. Der zweite Schritt 12 und der dritte Schritt 13 können nacheinander oder auch gleichzeitig ausgeführt werden bzw. fließend ineinander übergehen.

Figur 2 zeigt ein Verfahren 2 nach dem zweiten Erfindungsaspekt zum Herstellen eines Biokunststoffprodukts in einer Vorrichtung aufweisend einen Prozessraum und eine Formgebungsvorrichtung. Das Verfahren 2 umfasst zunächst das Verfahren 1, bei dem ein Polymerwerkstoff mittels Vernetzen von Polysacchariden aus Makroalgen in dem Prozessraum hergestellt wird. Daraufhin erfolgt in einem vierten Schritt 14 eine Formgebung des Polymerwerkstoffs in der Formgebungsvorrichtung zu einem Biokunststoffprodukt. Die Formgebungsvorrichtung kann beispielsweise eine Extrusionsdüse oder eine Spritzgussvorrichtung sein. In einem optionalen fünften Schritt 15 erfolgt ein Trocknen des Biokunststoffprodukts, während in einem ebenfalls optionalen sechsten Schritt 16 ein Abkühlen des Biokunststoffprodukts erfolgt. Der fünfte Schritt 15 und der sechste Schritt 16 können gleichzeitig erfolgen, wobei die Restwärme, die durch das Abkühlen abgeführt wird, auch zum Trocknen des Biokunststoffprodukts genutzt werden kann.

Figur 3 zeigt eine Vorrichtung 3 zum Ausführen eines Verfahrens 1 nach dem ersten Erfindungsaspekt und/oder eines Verfahrens 2 nach dem zweiten Erfindungsaspekts. Die Vorrichtung 3 ist als Doppelschneckenextruder ausgebildet und weist einen Prozessraum 4 auf, in dem auf parallelen Rotationsachsen zwei Schnecken 5.1, 5.2 angeordnet sind. Die Schnecken 5.1, 5.2 sind stark vereinfacht dargestellt, weisen jedoch nicht dargestellte Windungen mit aufeinander abgestimmten Geometrien auf, sodass die Schnecken 5.1, 5.2 bei Rotation auf ein in dem Prozessraum 4 befindliches Medium Druck ausüben und zudem eine Mischung des Mediums sowie eine Förderung des Mediums in einer axialen Richtung A bewirken.

In den Prozessraum 4 wird über einen Trichter 6 ein erster Ausgangsstoff 7, enthaltend Polysaccharide aus Makroalgen, und über einen Schlauch ein zweiter Ausgangsstoff 8, der insbesondere als Flüssigkeit ausgebildet ist und neben Wasser zumindest einen Zusatzstoff enthält, eingefüllt. Der zweite Ausgangsstoff 8 dient insbesondere dazu, dass die Polysaccharide sich darin lösen können. Der erste Ausgangsstoff 7 und der zweite Ausgangsstoff 8 werden in dem Prozessraum 4 mittels den Schnecken 5.1, 5.2 gemischt. Die entstehende Mischung wird entlang dem Prozessraum 4 in der axialen Richtung A gefördert, dabei weiter durchmischt und druckbeaufschlagt. Weiterhin wird die Mischung mittels Temperiermitteln 9 auf eine Prozesstemperatur temperiert. Ein Eintrag von Wärmeenergie erfolgt ferner auch über die mechanische Arbeit, die die Schnecken 5.1, 5.2 an der Mischung verrichten. Insgesamt erfolgt in der Mischung während dem Durchlaufen des Prozessraums 4 ein Vernetzen der Polysaccharide zu einem Polymerwerkstoff.

An einem in axialer Richtung A endseitigen Ausgang des Prozessraums 4 ist eine Formgebungsvorrichtung 10 angeordnet, durch die der Polymerwerkstoff hindurchgedrückt wird. Die Formgebungsvorrichtung 10 ist beispielsweise als Extrusionsdüse ausgebildet, wobei an der Extrusionsdüse eine formgebende Extrusion in eine gewünscht Geometrie erfolgt, beispielsweise in die Geometrie eines Profils, einer Folie oder eines Halbzeugs für eine Folie. Nachfolgend auf die Extrusionsdüse ist beispielsweise eine nicht näher dargestellte Abkühl- und Trockenstrecke vorgesehen, über die ein an der Extrusionsdüse geformtes Biokunststoffprodukt abkühlen und/oder trocknen kann. Die Formgebungsvorrichtung 10 kann auch als Spritzdüse zum Einspritzen des Polymerwerkstoffs in eine Spritzgussmatrize ausgebildet sein. Ein durch Spritzguss geformtes Biokunststoffprodukt wird dann beispielsweise nach dem Formen aus der Spritzgussmatrize entformt und an der Umgebungsluft abgekühlt und/oder getrocknet.

### Bezugszeichenliste

- 1: Verfahren
- 2: Verfahren
- 3: Vorrichtung
- 4: Prozessraum
- 5.1: Schnecke
- 5.2: Schnecke
- 6: Trichter
- 7: erster Ausgangsstoff
- 8: zweiter Ausgangsstoff
- 9: Temperiermittel
- 10: Formgebungsvorrichtung
- 11: erster Verfahrensschritt - Bereitstellen eines ersten Ausgangsstoffs
- 12: zweiter Verfahrensschritt - Zuführen des ersten Ausgangsstoffs in den Prozessraum
- 13: dritter Verfahrensschritt - Vernetzten der Polysaccharide zu einem Polymerwerkstoff
- 14: vierter Verfahrensschritt - Formgeben des Polymerwerkstoffs
- 15: fünfter Verfahrensschritt - Trocknen des Biokunststoffprodukts
- 16: sechster Verfahrensschritt - Abkühlen des Biokunststoffprodukts
- A: axiale Richtung

## Patentansprüche

1. Verfahren (1) zum Vernetzen von Polysacchariden aus Makroalgen zu einem Polymerwerkstoff in einem Prozessraum (4), aufweisend die Schritte (11, 12, 13):
Bereitstellen eines die Polysaccharide aus Makroalgen enthaltenden ersten Ausgangsstoffs (7);
Zuführen des ersten Ausgangsstoffs (7) in den Prozessraum (4); und
Vernetzten der Polysaccharide zu einem Polymerwerkstoff in dem Prozessraum (4);
**dadurch gekennzeichnet, dass** der erste Ausgangsstoff (7) zum Bereitstellen auf ein definiertes Molekulargewicht der Polysaccharide eingestellt wird.

2. Verfahren (1) nach Anspruch 1, wobei der erste Ausgangsstoff (7) zum Bereitstellen auf ein definiertes Molekulargewicht von weniger als 900.000 g/mol eingestellt wird.

3. Verfahren (1) nach Anspruch 1 oder 2, wobei der erste Ausgangsstoff (7) zum Einstellen des definierten Molekulargewichts enzymatisch behandelt, temperiert und/oder gelagert wird.

4. Verfahren (1) nach einem der vorhergehenden Ansprüche, wobei der erste Ausgangsstoff (7) als Polysaccharid zumindest Carrageenan enthält.

5. Verfahren (1) nach einem der vorhergehenden Ansprüche, wobei in den Prozessraum (4) neben dem ersten Ausgangsstoff (7) zumindest ein zweiter Ausgangsstoff (8), insbesondere eine Wasser enthaltende Flüssigkeit, zugeführt wird.

6. Verfahren (1) nach Anspruch 5, wobei der zweite Ausgangsstoff (8) Wasser und zumindest einen Zusatzstoff enthält, insbesondere ein Lösungsmittel und/oder einen Weichmacher.

7. Verfahren (2) zum Herstellen eines Biokunststoffprodukts in einer Vorrichtung (3) aufweisend einen Prozessraum (4) und zumindest eine Formgebungsvorrichtung (10), aufweisend die Schritte (11, 12, 13, 14, 15, 16):
Vernetzen von Polysacchariden aus Makroalgen zu einem Polymerwerkstoff in dem Prozessraum (4) gemäß dem Verfahren (1) nach einem der vorhergehenden Ansprüche;
Formgeben des Polymerwerkstoffs in der Formgebungsvorrichtung (10) zu einem Biokunststoffprodukt;
optional Trocknen des Biokunststoffprodukts; und
optional Abkühlen des Biokunststoffprodukts.

8. Verfahren (2) nach Anspruchs 7, wobei der Prozessraum (4) durch einen Schneckenextruder, insbesondere einen Doppelschneckenextruder, gebildet ist.

9. Verfahren (2) nach Anspruch 7 oder 8, wobei die zumindest eine Formgebungsvorrichtung (10) durch eine Extrusionsdüse oder eine Spritzgussvorrichtung gebildet ist.

10. Verfahren (2) nach einem der Ansprüche 7 bis 9, wobei das Verfahren (2) kontinuierlich ausgeführt wird.

11. Biokunststoffprodukt, erhalten durch ein Verfahren (2) nach einem der Ansprüche 7 bis 10.

12. Biokunststoffprodukt nach Anspruch 11, aufweisend ein Molekulargewicht von weniger als 900.000 g/mol.

13. Biokunststoffprodukt nach Anspruch 11 oder 12, ausgebildet als Folie, als Halbzeug für eine Folie oder als Profil.

14. Ausgangsstoff (7) für ein Verfahren (1, 2) nach einem der Ansprüche 1 bis 10, enthaltend zumindest ein Polysaccharid aus Makroalgen, wobei der Ausgangsstoff (7) ein definiertes Molekulargewicht der Polysaccharide aufweist.

15. Ausgangsstoff (7) nach Anspruch 14, wobei das definierte Molekulargewicht weniger als 900.000 g/mol beträgt.
